## Europäisches Patentamt

## European Patent Office

## Office européen des brevets

(19)

(11) Veröffentlichungsnummer: **0 050 673**
**B1**

(12) **EUROPÄISCHE PATENTSCHRIFT**

(45) Veröffentlichungstag der Patentschrift:
**16.01.85**

(51) Int. Cl.⁴: **H 04 N 1/40**

(21) Anmeldenummer: **80106508.7**

(22) Anmeldetag: **24.10.80**

(54) **Verfahren und Vorrichtung zur Bildwiedergabe durch Grauton-Aufzeichnung auf einem Aufzeichnungsträger mit elektrosensitivem Belag, insbesondere Registrier-Metallpapier.**

(43) Veröffentlichungstag der Anmeldung:
**05.05.82 Patentblatt 82/18**

(45) Bekanntmachung des Hinweises auf die Patenterteilung:
**16.01.85 Patentblatt 85/3**

(84) Benannte Vertragsstaaten:
**DE FR GB IT NL**

(56) Entgegenhaltungen:
**FR - A - 1 105 185**
**GB - A - 986 581**
**US - A - 2 052 383**
**US - A - 3 588 912**
**US - A - 3 931 461**

(73) Patentinhaber: **ROBERT BOSCH GMBH, Postfach 50, D-7000 Stuttgart 1 (DE)**

(72) Erfinder: **Kudelski, Stefan, Ing., Ch. de la Croix, 1052 Le Mont-sur-Lausanne (CH)**
Erfinder: **Schlup, Jean-Claude, Ing., Ch. des Grand-Champs, 1033 Cheseaux-sur-Lausanne (CH)**

ACTORUM AG

## Beschreibung

Die Erfindung geht aus von einem Verfahren nach der Gattung des Anspruches 1 und einer Vorrichtung nach der Gattung des Anspruches 7. Ein entsprechendes Verfahren und die zugehörige Vorrichtung sind aus der GB-A-986 581 bekannt. Diese Druckschrift beschreibt ein Aufzeichnungsverfahren, welches eine Grautonaufzeichnung grundsätzlich zulässt, verfahrensmässig und schaltungstechnisch jedoch keine Angaben darüber macht, wie die Grautonaufzeichnung ausgeführt werden kann. Diese bekannte Vorrichtung besitzt ebenfalls einen elektrischen Speicher zum Ausbrennen von Rasterpunkten aus dem elektrosensitiven Belag des Aufzeichnungsträgers entsprechend den zugeführten Impulsen, Massnahmen zur geregelten Speicherung der für den betreffenden Impuls bemessenen elektrischen Energie in Funktion der gewünschten Oberfläche des Rasterpunktes sind nicht vorgesehen.

Aus der US-A-3 588 912 ist eine elektrische Druckvorrichtung bekannt, bei der mittels eines Hochstrom-Stiftes thermische Aufzeichnungen unter Zwischenschaltung einer Metallfolie auf einem thermischen Aufzeichnungsträger durchgeführt werden. Die Schreibimpulse werden geliefert von einem elektrischen Kondensator, welcher in einem Schwingkreis angeordnet ist und durch eine Impulsfolge gezielt entladen wird. Der Kondensator wird ungesteuert aufgeladen, beim Aufzeichnen wird die Entladedauer gesteuert.

Weiterhin ist es bekannt, zum Erzeugen unterschiedlicher Grautöne die an die Schreibelektrode einer Aufzeichnungsvorrichtung angelegte Spannung zu variieren, wodurch sich die Grösse der Flächen der Schreibspur bzw. der einzelnen Rasterpunkte einer Schreibspur ändert. Dieses Verfahren ist jedoch nicht immer einfach zu beherrschen, weil zwischen der angelegten Spannung und dem Grad der Grautönung in einem unteren Spannungsbereich eine kontinuierliche Abhängigkeit nicht gewährleistet ist. Man hat festgestellt, dass bei bestimmten Beschaffenheiten der Kontaktflächen und anderen Voraussetzungen in einem unteren Spannungsbereich, z.B. bei 18–20 Volt, die Schreibelektrode nach Art eines nichtelektrischen Schweissbrenners arbeitet, der die Schreibspur aus dem Aufzeichnungsträger herausschneidet. Dabei besteht die Tendenz, dass sich an der Kontaktzone der Schreibelektrode metallische und nicht metallische Partikel festsetzen, welche eine exakt der angelegten Spannung entsprechende Ausbildung der Schreibspur bzw. der einzelnen Rasterpunkte beeinträchtigen. Bei Erhöhung der Spannung, z.B. über 20 Volt, ändert sich der Prozess der Schreibspurbildung, indem sich ein Lichtbogen zwischen Schreibelektrode und elektrosensitivem Belag des Aufzeichnungsträgers ausbildet. Dieser Lichtbogen hat jedoch zunächst noch einen verhältnismässig geringen Energieinhalt und ist daher nicht in jedem Fall in der Lage, das zu entfernende Metall vollständig zu verdampfen. Das hat zur Folge, dass die Flächen der Schreibspur bzw. der einzelnen Rasterpunkte und damit die Grautönung nicht die der Grösse des angelegten Schreibsignals entsprechenden Werte erreichen. Erst wenn die Schreibspannung einen bestimmten Wert, z.B. 22 Volt, übersteigt, wird das zu entfernende Material mit grosser Sicherheit vollständig verdampft, wobei der Prozess des Ausbrennens der Schreibspur bis zur völligen Schwarzwiedergabe exakt nach den eingegebenen Signalen verläuft. Beim bekannten Verfahren können ferner auch Oxidschichten, die sich auf dem Metallbelag des Aufzeichnungsträgers gebildet haben, die Qualität der Bildwiedergabe nachteilig beeinflussen, weil sie den Übergangswiderstand zwischen Schreibelektrode und Metallbelag erhöhen und dadurch den Schreibstrom verringern oder ganz unterbrechen.

Der Erfindung liegt die Aufgabe zugrunde, ein Verfahren zur Bildwiedergabe durch Grauton-Aufzeichnung auf einem Aufzeichnungsträger mit elektrosensitivem Belag sowie eine zugehörige Aufzeichnungsvorrichtung zu schaffen, bei denen sich die mit jedem Schreibimpuls an die Schreibelektrode abzugebende Energie genau dosieren lässt zur Erzielung einer kontinuierlichen Abhängigkeit zwischen den einzelnen Schreibsignalen und der Grösse der freigebrannten Flächen der einzelnen Rasterpunkte über den gesamten Steuerbereich hinweg. Hierbei soll durch schlagartiges Auslösen der gespeicherten Energie bei jedem Schreibimpuls das zu entfernende Material des Metallbelages unabhängig von der jeweils gespeicherten Energiemenge vollständig verdampft werden, so dass auch Bildstellen mit hellerer Tönung, d.h. geringerem Metallabtrag exakt reproduzierbar sind.

Diese Aufgabe wird erfindungsgemäss gelöst durch die kennzeichnenden Merkmale des Anspruches 1, bzw. des Anspruches 7. Durch die in den abhängigen Ansprüchen aufgeführten Massnahmen sind vorteilhafte Weiterbildungen des angegebenen Verfahrens und der zugehörigen Vorrichtung möglich. Hierbei ist es besonders vorteilhaft, wenn die jeweils benötigte Energie auf einem höheren Spannungsniveau gespeichert wird, als es zur Bildung eines Lichtbogens zwischen der Schreibelektrode und dem elektrosensitiven Belag des Aufzeichnungsträgers notwendig ist. Dadurch kann der nachteilige Einfluss von Oxidschichten auf dem Aufzeichnungsträger weitgehend ausgeschaltet und die Qualität der Bildwiedergabe weiter erhöht werden.

Zum Schutz von Bauelementen des Impulsgebers wird weiter vorgeschlagen, die bei Unterbrechung des Kontaktes zwischen Schreibelektrode und dem elektrosensitiven Belag des Aufzeichnungsträgers hervorgerufene Überspannung abzusaugen, wenn diese einen vorgegebenen Wert übersteigt.

Die bei Unterbrechung des Schreibkontaktes an der Schreibelektrode hervorgerufene Überspannung kann vorteilhaft als Energie gespeichert und in folgenden Impulsen wieder genutzt werden.

Eine Vorrichtung zur Durchführung des Verfahrens nach dem Hauptanspruch hat vorteilhaft einen Impulsgenerator mit einem elektrischen Speicher, sowie eine Regel- und Kontrolleinrichtung, welche die in den Speicher vor Abgabe eines jeden Impulses jeweils einfliessende Energiemenge nach Massgabe eines von einem Aufnahmegerät erzeugten Schreibsignals steuert und überwacht.

Als Speicher kann ein Hochspannungstransformator vorgesehen sein, dessen Primärwicklung vorteilhaft mit einem Kondensator einen Schwingkreis bildet. Eine solche Anordnung ist an sich bei Kfz-Zündanlagen bekannt und hat sich dort bewährt.

Eine exakte Regelung bzw. Steuerung und Überwachung der Schreibimpulse nach Grösse und Frequenz wird erreicht, wenn die Regel- und Kontrolleinrichtung sowie ein Impulsfrequenzgeber über ein steuerbares elektronisches Schaltelement, vorzugsweise einen bipolaren Transistor, mit dem Primärstromkreis des Hochspannungstransformators gekoppelt sind.

Eine einfache und funktionssichere Anordnung ergibt sich, wenn in Reihe mit dem steuerbaren Schaltelement ein Messwiderstand im Primärstromkreis des Hochspannungstransformators liegt und die Regel- und Kontrolleinrichtung einen Komparator hat, welcher die im leitenden Zustand des Schaltelements am Messwiderstand abfallende Spannung mit einer von einem Aufnahmegerät erzeugten Signalspannung vergleicht und eine das Schaltelement in den Sperrzustand überführendes Ausgangssignal liefert, wenn die am Messwiderstand abfallende Spannung gleich der Signalspannung ist. Der Ausgang des Komparators kann dabei zweckmässig über den Impulsfrequenzgeber mit dem Steuereingang des elektronischen Schaltelementes verbunden sein.

Zum Speichern bzw. Wiedergewinnen der Überspannungsenergie wird vorgeschlagen, dass der Hochspannungstransformator zwei Sekundärwicklungen hat, von denen die eine in Reihe mit einer ersten Diode und der Schreibelektrode in einem Schreibstromkreis liegt, wogegen die andere Sekundärwicklung in Reihe mit einer zweiten Diode und parallel zu einem Filterkondensator an die Stromversorgung für den Hochspannungstransformator angeschlossen ist.

Zeichnung

Ein Ausführungsbeispiel der Erfindung ist in der Zeichnung dargestellt und in der nachfolgenden Beschreibung näher erläutert. Es zeigen Fig. 1 ein schematisches Gesamtbild und Fig. 2 ein elektrisches Schaltbild einer Vorrichtung zur Durchführung des erfindungsgemässen Aufzeichnungsverfahrens. In den Figuren 3a bis c sind nach dem Verfahren hergestellte Schreibspuren dargestellt.

Beschreibung des Ausführungsbeispiels

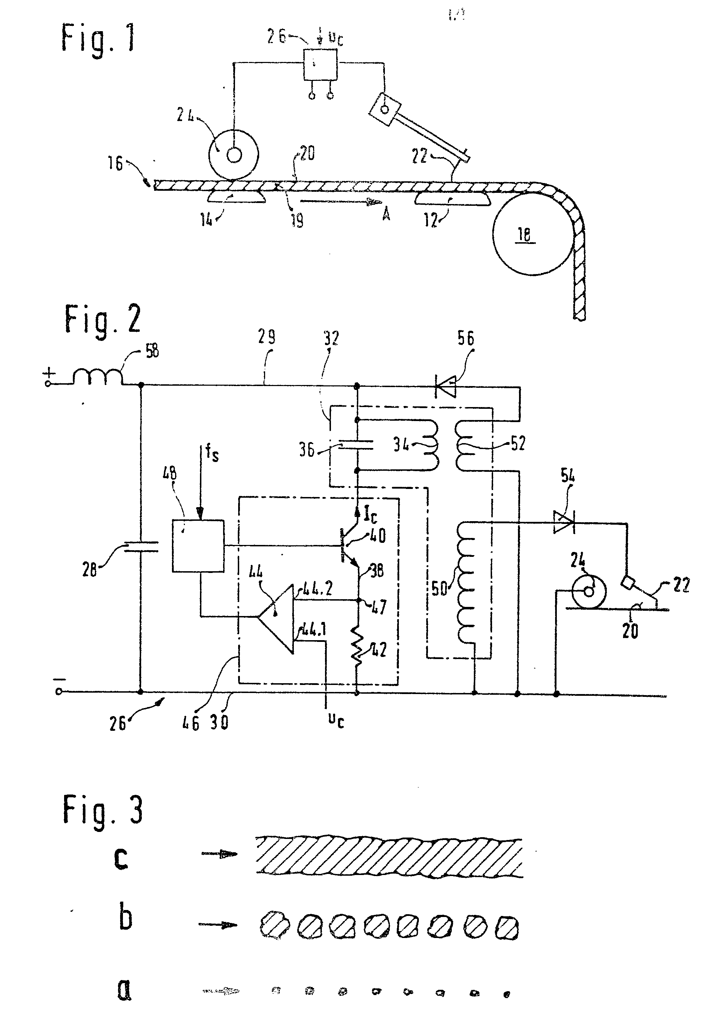

Die Vorrichtung nach Fig. 1 hat zwei feststehende Auflager 12 und 14, über welche ein biegsamer Aufzeichnungsträger 16 mittels einer Transporteinrichtung 18 in Richtung des Pfeiles A hinwegziehbar ist. Als Aufzeichnungsträger 16 dient metallisiertes Papier, dessen aus elektrisch isolierendem Material bestehende Trägerfolie 19 auf den Auflagern 12 und 14 aufliegt und das auf der Oberseite einen metallischen Überzug 20 trägt. An diesem liegt im Bereich des Auflagers 12 eine Schreibelektrode 22 und im Bereich des Auflagers 14 eine grossflächige Gegenelektrode 24 an, welche als mitlaufende Rolle ausgebildet ist. Die Elektroden 22 und 24 sind mit einem elektrischen Impulsgenerator 26 verbunden, der nach Massgabe einer Signalspannung $u_c$ Energieimpulse unterschiedlicher Intensität in die Schreibelektrode 22 schickt, von welcher der Strom über den metallischen Überzug 20 und die Gegenelektrode 24 zum Impulsgenerator 26 zurückfliesst. Infolge der hohen Stromdichte in der Kontaktzone der Schreibelektrode 22 wird der metallische Überzug 20 örtlich aufgeschmolzen und verdampft, wobei je nach Intensität der Energieimpulse kleinere oder grössere Ausbrandstellen im Überzug entstehen, die vom Auge als Grauflächen unterschiedlicher Tönung wahrgenommen werden.

Die Signalspannung $u_c$ wird von einem nicht dargestellten Aufnahmegerät geliefert, welches die Signalspannung entsprechend der Grautönung des jeweils aufgenommenen Rasterpunktes auf dem Original moduliert.

Der Impulsgenerator 26 nach Fig. 2 hat eine Konstantspannungsquelle mit einem Siebkondensator 28, von welchem Versorgungsleitungen 29 und 30 zu einem Hochspannungstransformator 32 führen. Dieser hat eine Primärwicklung 34, die mit einem Kondensator 36 einen Schwingkreis bildet. Der Schwingkreis 34, 36 ist an die beiden Versorgungsleitungen 29, 30 über eine Leitung 38 angeschlossen, in welcher die Kollektor-Emitter-Strecke eines npn-Transistors 40 und ein Messwiderstand 42 liegen. Der Kondensator 36 bestimmt die Eigenfrequenz des Schwingkreises 34, 36. Seine Grösse ist experimentell zu optimieren.

Der Transistor 40 und der Messwiderstand 42 sind mit einem Komparator 44 zu einer Regel- und Kontrolleinrichtung 46 zusammengefasst, welche den dem Schwingkreis 34, 36 zufliessenden Kollektorstrom $I_c$ nach Massgabe des Schreibsignals $u_c$ steuert und überwacht. Die Signalspannung $u_c$ liegt am ersten Eingang 44.1 des Komparators 44 an, dessen zweiter Eingang 44.2 mit einem zwischen Transistor 40 und Messwiderstand 42 in der Leitung 38 liegenden Schaltpunkt 47 verbunden ist. Der Ausgang des Komparators 44 ist an einen Impulsgeber 48 angeschlossen, dessen Ausgang mit der Basis des Transistors 40 verbunden ist. Der Impulsgeber 48 steuert in regelmässigen Zeitabständen, die z.B. 100 µs betragen können, den Transistor 40 in den leitenden Zustand. Der Komparator 44 liefert an den Impulsgeber 48 ein den Transistor 40 in den Sperrzustand überführendes Signal, wenn die Spannung an seinem zweiten Eingang 44.2 gleich der Signalspannung $u_c$ am Eingang 44.1 ist. Der Sollwert $f_s$ der Impulsfrequenz ist einstellbar.

Der Hochspannungstransformator 32 hat zwei Sekundärwicklungen 50 und 52, deren eines Ende mit der Versorgungsleitung 30 verbunden ist, an welche auch die Gegenelektrode 24 angeschlossen ist. Das andere Ende der Sekundärwicklung 50 ist über eine Diode 54 mit der Schreibelektrode 22 verbunden, während das andere Ende der Sekundärwicklung 52 über eine Diode 56 an die Versorgungsleitung 29 angeschlossen ist. Die Diode 56 spricht erst beim Auftreten von negativen Überspannungen an, die durch Unterbrechungen des Schreibstromkreises verursacht sind. Die Anordnung kann auch so getroffen sein, dass über die Diode 56 die vom Schreibstromkreis nicht aufgenommene negative Halbwelle der Schwingkreisentladung in den Siebkondensator 28 gelangt und dort zur Wiederverwendung im nächsten Impuls gespeichert wird.

Anstelle der zweiten Sekundärwicklung 52 und der Diode 56 kann in der Sekundärseite des Hochspannungstransformators 32 auch ein Element zum Absorbieren der Überspannungsenergie, z.B. eine Zenerdiode, angeordnet werden. Bei dieser vereinfachten Anordnung geht allerdings ein Teil der Energie verloren.

Die beschriebene Vorrichtung arbeitet wie folgt:

Wenn der Impulsgeber 48 zu einem bestimmten Zeitpunkt den Transistor 40 in den leitenden Zustand steuert, beginnt in der Leitung 38 ein Strom $I_c$ zu fliessen, der den Kondensator 36 lädt und das Magnetfeld der Primärwicklung 34 aufbaut. In dieser Phase wird die für den folgenden Impuls benötigte Energiemenge dem Hochspannungstransformator 32 zugeführt und darin in Form des Magnetfeldes der Primärwicklung 34 und der Ladung des Kondensators 36 gespeichert. Die Regel- und Kontrolleinrichtung 46 sorgt dabei dafür, dass die Menge der in den Hochspannungstransformator 32 fliessenden Energie dem der jeweils anliegenden Signalspannung $u_c$ zugeordneten Wert entspricht. Das wird auf vorteilhafte Weise dadurch erreicht, dass das Spannungspotential des Schaltpunktes 47 in der Leitung 38 zum Vergleich mit der Signalspannung $u_c$ herangezogen wird. Dieses Spannungspotential ändert sich nach dem Einleiten eines Ladevorganges mit der Grösse des Stromes $I_c$, der über den Transistor 40 fliesst. Bei entsprechender Auslegung der einzelnen Bauelemente kann das Potential des Schaltpunktes 47 vom Potential der Versorgungsleitung 30 stetig gegen das Potential der Versorgungsleitung 29 ansteigen, bis es den Spannungswert der Signalspannung $u_c$ erreicht. In diesem Moment gibt der Komparator 44 ein Ausgangssignal an den Impulsgeber 48 ab, welches den Impulsgeber 48 zum Überführen des Transistors 40 in den Sperrzustand veranlasst. Danach wird die im Schwingkreis 34, 36 gespeicherte, in Abhängigkeit von der Signalspannung $u_c$ geregelte Energiemenge in Form eines kräftigen Impulses in den Schreibstromkreis übertragen. Dabei wird abhängig von der Grösse der jeweils gespeicherten Energiemenge das gesamte, an einem Rasterpunkt zu entfernende Material des elektrosensitiven Belages 20 verdampft und dabei auch eine Verunreinigung der Schreibelektrode 22 vermieden. Damit ist gewährleistet, dass die freigelegten Flächen an den Ausbrenn- bzw. Rasterpunkten in ihrer Grösse der vorgegebenen Signalspannung $u_c$ und damit der Grösse des abzubildenden Originals entsprechen.

Wenn aus irgendeinem Grunde der Schreibstromkreis unterbrochen wird, gelangt der Energieimpuls über die Diode 56 in den Siebkondensator 28, wobei neben dem schon beschriebenen Vorteil der Energierückgewinnung der Transistor 40 vor Beschädigung bzw. Zerstörung geschützt wird. Die Gleichspannungsquelle ist ferner durch eine Drosselspule 58 geschützt, welche eine Barriere für durch Unterbrechungen des Schreibstromkreises hervorgerufene Überspannungsstösse darstellt.

Durch Einstellung des Sollwertes $f_s$ des Impulsgebers 48 kann den die Güte der Reproduktion bestimmenden bzw. beeinflussenden Parametern Rechnung getragen werden, z.B. der Relativgeschwindigkeit der Schreibelektrode gegenüber dem Aufzeichnungsträger und den gewünschten Abständen der Schreibspuren oder der einzelnen Ausbrennpunkte eines Rasters. Die von dem nicht dargestellten Aufnahmegerät in Abhängigkeit von der Tönung des jeweils getasteten Rasterpunktes auf dem Original erzeugte Signalspannung $u_c$ kann durch Kabel oder auch drahtlos übertragen werden.

Das erfindungsgemässe Verfahren ergibt in den hellen Bereichen des Bildes ein gemäss Fig. 3a aus einzelnen Punkten gezeichnetes Raster, welches in einer Fläche gleichmässig grau erscheint. Der Durchmesser der einzelnen Rasterpunkte kann beispielsweise den zwanzigsten Teil des Durchmessers der Schreibelektrode betragen, der beispielsweise 0,15 mm gross sein kann. Mit zunehmender Energiemenge pro Impuls steigt der Durchmesser der einzelnen Rasterpunkte an, wie in Fig. 3b gezeigt ist. Für eine mittlere Grautönung kann bei einem Elektrodendurchmesser von 0,15 mm und einem Schreibzeilenabstand von 0,18 mm der Durchmesser der einzelnen Rasterpunkte etwa 0,1 mm betragen. In diesem Fall bleiben zwischen benachbarten Rasterpunkten einer Schreibzeile und zwischen den Rasterpunkten benachbarter Schreibzeilen noch Flächen des elektrosensitiven Belages frei, die nicht ausgebrannt sind. In Bereichen hoher Grautönung oder Schwärzung haben die Rasterpunkte einen so grossen Durchmesser, dass sie ineinander übergehen, wie in Fig. 3c dargestellt ist. Der Durchmesser der im einzelnen nicht mehr auszumachenden Rasterpunkte kann in diesem Fall etwa 0,18 mm betragen und damit den Durchmesser der Schreibelektrode 3 etwas übersteigen.

Die drei dargestellten Typen von Schreibspuren bzw. Rasterpunkten und alle nicht dargestellten Zwischenstufen entsprechen jeweils genau der angelegten Signalspannung $u_c$ und sind jeweils durch vollständige Verdampfung des zu eliminierenden Materials des Aufzeichnungsträgers gebildet. Dabei wird in jedem Fall eine Verschmutzung der Schreibelektrode vermieden und ferner auch eine etwa vorhandene Oxidschicht auf dem Aufzeichnungsträger durchschlagen. In diesem Fall kann man konstatieren, dass der Durchschlag durch die Oxidschicht die Schreibspur, d.h. den Grad der Tönung, nicht unerwünscht verändert, und dass die beim Durchschlag verlorengehende Energie vernachlässigbar klein ist.

## Patentansprüche

1. Verfahren zur Bildwiedergabe durch Grauton-Aufzeichnung auf einem Aufzeichnungsträger mit elektrosensitivem Belag, insbesondere Registrier-Metallpapier, mit mindestens einer Schreibelektrode, die am Aufzeichnungsträger anliegt und welcher elektrische Impulse aus einem elektrischen Speicher zum Ausbrennen von Rasterpunkten aus dem elektrosensitiven Belag des Aufzeichnungsträgers zugeführt werden, dadurch gekennzeichnet, dass vor Abgabe eines jeden Impulses die für den betreffenden Impuls bemessene elektrische Energie in Funktion der gewünschten Oberfläche des entsprechenden Rasterpunktes geregelt und gespeichert wird.

2. Verfahren nach Anspruch 1, dadurch gekennzeichnet, dass die jweils zu speichernde Energie in Funktion der Grösse der freizubrennenden Oberfläche der Rasterpunkte geregelt wird.

3. Verfahren nach Anspruch 2, dadurch gekennzeichnet, dass die jweils zu speichernde Energie proportional zu der Grösse der freizubrennenden Oberfläche der Rasterpunkte geregelt wird.

4. Verfahren nach einem der Ansprüche 1 bis 3, dadurch gekennzeichnet, dass die jeweils benötigte Energie auf einem höheren Spannungsniveau gespeichert wird als es zur Bildung eines Lichtbogens zwischen Schreibelektrode (22) und elektrosensitivem Belag (20) des Aufzeichnungsträgers notwendig ist.

5. Verfahren nach einem der vorhergehenden Ansprüche, dadurch gekennzeichnet, dass die durch eine eventuelle Unterbrechung des Kontaktes zwischen Schreibelektrode (22) und dem elektrosensitiven Belag (20) des Aufzeichnungsträgers hervorgerufene Überspannung abgeleitet wird, wenn diese einen vorgegebenen Wert übersteigt.

6. Verfahren nach einem der Ansprüche 1 bis 4, dadurch gekennzeichnet, dass die durch eine eventuelle Unterbrechung des Kontaktes zwischen Schreibelektrode (22) und elektrosensitivem Belag (20) hervorgerufene Überspannung als Energie gespeichert und in folgenden Impulsen wiedergenutzt wird.

7. Vorrichtung zur Bildwiedergabe durch Grauton-Aufzeichnung auf einem Aufzeichnungsträger (19, 20) mit elektrosensitivem Belag (20), insbesondere Registrier-Metallpapier, mit mindestens einer am Aufzeichnungsträger (19, 20) anliegenden Schreibelektrode (22) und einem elektrischen Impulsgenerator (26) im Schreibstromkreis, welcher der Schreibelektrode (22) elektrische Impulse zum Ausbrennen von Rasterpunkten aus dem elektrosensitiven Belag (20) des Aufzeichnungsträgers (19, 20) aus einem elektrischen Speicher (31) zuführt, dadurch gekennzeichnet, dass dem elektrischen Speicher (32) eine Regeleinrichtung (46) zugeordnet ist, welche vor Abgabe eines jeden Impulses die für den betreffenden Impuls bemessene elektrische Energie in Funktion der gewünschten Oberfläche des entsprechenden Rasterpunktes regelt.

8. Vorrichtung nach Anspruch 7, dadurch gekennzeichnet, dass zur Speicherung der für jeden Impuls benötigten Energie ein Hochspannungstransformator (32) vorgesehen ist.

9. Vorrichtung nach Anspruch 8, dadurch gekennzeichnet, dass die Primärwicklung (34) des Hochspannungstransformators (32) mit einem Kondensator (36) einenSchwingkreis bildet.

10. Vorrichtung nach Anspruch 8 oder 9, dadurch gekennzeichnet, dass der Primärstromkreis des Hochspannungstransformators (32) von einem Impulsgeber (48) gesteuert ist.

11. Vorrichtung nach Anspruch 10, dadurch gekennzeichnet, dass die Regeleinrichtung (46) sowie der Impulsgeber (48) über ein steuerbares elektronisches Schaltelement (40), vorzugsweise einen bipolaren Transistor, mit dem Primärstromkreis des Hochspannungstransformators (32) gekoppelt sind.

12. Vorrichtung nach Anspruch 11, dadurch gekennzeichnet, dass in Reihe mit dem steuerbaren Schaltelement (40) ein Messwiderstand (42) im Primärstromkreis des Hochspannungstransformators (32) liegt und dass ferner die Regeleinrichtung (46) einen Komparator (44) hat, welcher die im leitenden Zustand des Schaltelementes (40) am Messwiderstand (42) abfallende Spannung mit einer von einem Aufnahmegerät erzeugten Signalspannung ($u_c$) vergleicht und ein das Schaltelement (40) in den Sperrzustand überführendes Ausgangssignal liefert, wenn die am Messwiderstand (42) abfallende Spannung gleich der Signalspannung ($u_c$) ist.

13. Vorrichtung nach Anspruch 12, dadurch gekennzeichnet, dass der Ausgang des Komparators (44) über den Impulsgeber (48) mit dem Steuereingang des elektronischen Schaltelementes (40) verbunden ist.

14. Vorrichtung nach einem der Ansprüche 7 bis 13, dadurch gekennzeichnet, dass ein Element (56) zum Ableiten einer bei einer Unterbrechung des Kontaktes zwischen der Schreibelektrode (22) und den Aufzeichnungsträger (20) gegebenenfalls entstehenden Überspannung vorgesehen ist, welches bei Erreichen einer vorgegebenen Grenzspannung anspricht.

## Revendications

1. Procédé pour la reproduction d'image par enregistrement en grisaille sur un support d'enregistrement comportant une couche électro-sensible, notamment un papier métallique enregistreur, avec au moins une électrode d'enregistrement s'appliquant sur le support d'enregistrement et à laquelle sont amenées, à partir d'un accumulateur d'énergie électrique, des impulsions électriques pour pyrogéner des points de trame sur la couche électro sensible du support d'enregistrement, procédé caractérisé en ce que, avant l'émission de chacune des impulsions, la quantité d'énergie électrique mesurée pour l'impulsion considérée, est réglée et emmagasinée en fonction de la surface souhaitée du point de trame correspondant.

2. Procédé selon la revendication 1, caractérisé en ce que l'énergie à emmagasiner dans chaque cas, est réglée en fonction de la grandeur de la surface à pyrogéner du point de trame.

3. Procédé selon la revendication 2, caractérisé en ce que l'énergie à emmagasiner dans chaque cas, est réglée proportionnellement à la grandeur de la surface à pyrogéner du point de trame.

4. Procédé selon une des revendications 1 à 3, caractérisé en ce que l'énergie nécessaire dans chaque cas, est emmagasinée à un niveau de tension plus élevé que cela est nécessaire pour la formation d'un arc électrique entre l'électrode d'enregistrement (22) et la couche électrosensible (20) du support d'enregistrement.

5. Procédé selon une des précédentes revendications, caractérisé en ce que la surtension provoquée par une interruption éventuelle du contact entre l'électrode d'enregistrement (22) et la couche électro-sensible (20) du support d'enregistrement, est éliminée lorsqu'elle dépasse une valeur prédéfinie.

6. Procédé selon une des revendications 1 à 4, caractérisé en ce que la surtension provoquée par une éventuelle interruption du contact entre l'électrode d'enregistrement (22) et la couche électro-sensible (20) est emmagasinée sous forme d'énergie et réutilisée dans les impulsions suivantes.

7. Dispositif pour la reproduction d'image par enregistrement en grisaille sur le support d'enregistrement (19, 20) comportant une couche électro-sensible (20) notamment un papier métallique enregistreur avec au moins une électrode d'enregistrement (22) appliquée sur le support d'enregistrement (19, 20) et un générateur d'impulsions électriques (26) dans le circuit de courant d'enregistrement, qui fournit à l'électrode d'enregistrement (22) des impulsions électriques pour pyrogéner des points de trame sur la couche électro-sensible (20) du support d'enregistrement (19, 20) à partir d'un accumulateur d'énergie électrique (31), dispositif caractérisé en ce qu'un dispositif de régulation (46) est associé à l'accumulateur d'énergie électrique (32), ce dispositif de régulation réglant, avant la délivrance de chaque impulsion, l'énergie électrique mesurée pour l'impulsion considérée en fonction de la surface souhaitée du point de trame correspondant.

8. Dispositif selon la revendication 7, caractérisé en ce qu'un transformateur haute tension (32) est prévu pour emmagasiner l'énergie nécessaire pour chaque impulsion.

9. Dispositif selon la revendication 8, caractérisé en ce que l'enroulement primaire (34) du transformateur haute tension (32) constitue avec un condensateur (36) un circuit oscillant.

10. Dispositif selon revendication 8 ou 9 caractérisé en ce que le circuit de courant primaire du transformateur haute tension (32) est commandé par un émetteur d'impulsion (48).

11. Dispositif selon la revendication 10, caractérisé en ce que le dispositif de régulation (46) ainsi que l'émetteur d'impulsions (48) sont couplés par l'intermédiaire d'un élément électronique de commutation (40) susceptible d'être commandé, de préférence un transistor bipolaire, avec le circuit de courant primaire du transformateur haute tension (32).

12. Dispositif selon la revendication 11, caractérisé en ce qu'une résistance de mesure (42), en série avec l'élément de commutation susceptible d'être commandé (40), est placée dans le circuit de courant primaire du transformateur haute tension (32) et qu'en outre, le dispositif de régulation (46) comporte un comparateur (44), qui compare lorsque l'élément de commutation (40) est à l'état conducteur, la tension chutant sur la résistance de mesure (42) avec une tension de signal obtenue à partir d'un appareil d'enregistrement et délivre un signal de sortie faisant passer l'élément de commutation (40) à l'état de blocage lorsque la tension chutant sur la résistance de mesure (42) est égale à la tension ($u_c$) du signal.

13. Dispositif selon la revendication 12, caractérisé en ce que la sortie du comparateur (44) est reliée par l'intermédiaire du générateur d'impulsions (48) à l'entrée de commande de l'élément électronique de commutation (40).

14. Dispositif selon une des revendications 7 à 13, caractérisé en ce qu'il est prévu un élément (56) pour l'évacuation d'une surtension apparaissant éventuellement lors d'une interruption du contact entre l'électrode d'enregistrement (22) et le support d'enregistrement (20), cet élément réagissant lorsqu'une tension limite prédéfinie est atteinte.

**Claims**

1. Process for image reproduction by grey tone recording on a recording carrier having an electrosensitive covering, in particular e metallised paper recording medium, using at least one write electrode which rests against the recording medium and to which electrical pulses from an electrical storage device are fed in order to burn out raster points from the electrosensitive covering of the recording carrier, characterised in that before each pulse is delivered the electrical energy appropriate for the particular pulse is regulated as a function of the desired surface of the corresponding raster point, and is stored.

2. Process according to Claim 1, characterised in that the energy to be stored in each case is regulated as a function of the size of the raster point surface to be exposed by burning.

3. Process according to Claim 2, characterised in that the energy to be stored in each case is regulated to be proportional to the size of the raster point surface to be exposed by burning.

4. Process according to one of Claims 1 to 3, characterised in that the energy required in each case is stored at a higher voltage level than is needed to form an arc between the write electrode (22) and the electrosensitive covering (20) of the recording carrier.

5. Process according to one of the preceding claims, characterised in that the overvoltage caused by a possible break in the contact between the write electrode (22) and the electrosensitive covering (20) of the recording carrier is led away if it exceeds a predetermined value.

6. Process according to one of Claims 1 to 4, characterised in that the overvoltage caused by a possible break in the contact between the wirte electrode (22) and the electrosensitive covering (20) is stored as energy and is reused in subsequent pulses.

7. Apparatus for image reproduction by grey tone recording on a recording carrier (19, 20) having an electrosensitive covering (20), in particular a metallised paper recording medium, with at least one write electrode (22) which rests against the recording carrier (19, 20) and an electrical pulse generator (26) in the write current circuit, which leads electrical pulses, from an electrical storage device (31), to the write electrode (22) for burning out of raster points from the electrosensitive covering (20) of the recording carrier (19, 20), characterised in that a regulating device (46) is allocated to the electrical storage device (32), which regulating device, before delivery of each pulse, regulates the electrical energy appropriate for the particular pulse in accordance with the desired surface area of the corresponding raster point.

8. Apparatus according to Claim 7, characterised in that a high voltage transformer (32) is provided for storing the energy required for each pulse.

9. Apparatus according to Claim 8, characterised in that the primary winding (34) of the high voltage transformer (32) forms an oscillating circuit with a condenser (36).

10. Apparatus according to Claim 8 or 9, characterised in that the primary current circuit of the high voltage transformer (32) is controlled by a pulse generator (48).

11. Apparatus according to Claim 10, characterised in that the regulating device (46) as well as the pulse generator (48) are coupled via a controllable electronic switch element (40), preferably a bipolar transistor, to the primary current circuit of the high voltage transformer (32).

12. Apparatus according to Claim 11, characterised in that a measuring resistance (42) is located, in series with the controllable swith element (40), in the primary current circuit of the high voltage transformer (32) and that moreover the regulating device (46) has a comparator (44) which compares the voltage drop occurring on the measuring resistance (42) when the switch element (40) is conductive with a signal voltage $(u_c)$ generated by a pick-up apparatus and delivers an output signal which converts the switch element (40) to the blocked state if the voltage drop on the measurement resistance (42) is equal to the signal voltage $(u_c)$.

13. Apparatus according to Claim 12, characterised in that the output of the comparator (44) is connected via the pulse generator (48) to the control input of the electronic switch element (40).

14. Apparatus according to one of Claims 7 to 13, characterised in that an element (56) for leading away ah overvoltage which may be created upon a break of contact between the write electrode (22) and the recording carrier (20) is provided, which element responds when a predetermined limiting voltage is reached.

0 050 673

**Fig. 1**

**Fig. 2**

**Fig. 3**

9